# EUROPÄISCHE PATENTSCHRIFT

(11) **EP 2 072 430 B1**
(45) Veröffentlichungstag und Bekanntmachung des Hinweises auf die Patenterteilung: **10.08.2011**
(21) Anmeldenummer: 07405365.3
(22) Anmeldetag: 20.12.2007
(51) Int. Cl.: B65G 47/90, B65G 57/03, B65G 61/00, B65H 31/30

(54) **Paketgreifer für eine Palettiervorrichtung und Verfahren zum Palettieren von Paketen**
Packet gripper for a palletising device and method for palletising packets
Dispositif de saisie de paquet pour un dispositif de palettisation et procédé de palettisation de paquets

(43) Veröffentlichungstag der Anmeldung: 24.06.2009
(73) Patentinhaber: Müller Martini Holding AG, 6052 Hergiswil (CH)
(72) Erfinder: Ryf, Marc, 5000 Aarau (CH)

(56) Entgegenhaltungen:
- EP-A- 1 155 984
- WO-A-86/07579
- US-A- 4 787 810

## Beschreibung

Die Erfindung betrifft einen Paketgreifer für eine Palettiervorrichtung, mit der jeweils wenigstens ein Paket aus bedruckten oder unbedruckten Produkte von einer Zuführvorrichtung übernehmbar und auf einer Palette ablegbar ist, mit einem Gestell und mit wenigstens einem am Gestell gelagerten Finger, der zwischen einer ersten und einer zweiten Position bewegbar ist, wobei der Finger sich in der ersten Position zumindest bereichsweise hinter dem Anschlag und in der zweiten Position vor dem Anschlag in einer horizontalen Arbeitsstellung befindet, in welcher das wenigstens eine Paket auf dem Finger aufliegt, und mit einem Stempel, mit dem das auf dem Finger aufliegende und am Anschlag anliegende Paket klemmbar ist, wobei der Abstand zwischen dem Anschlag und dem vorderen Ende des sich in der Arbeitsstellung befindlichen Fingers zur Anpassung an unterschiedliche Längen der Pakete veränderbar ist. Die Erfindung betrifft zudem ein Verfahren zum Palettieren von Paketen aus bedruckten oder unbedruckten Produkten mit Hilfe einer Palettiervorrichtung.

Ein Paketgreifer dieser Art ist im Stand der Technik aus der EP-A-1 801 047 bekannt geworden. Mit diesem werden jeweils zwei nebeneinander angeordnete Stapel von einer Zuführvorrichtung übernommen und auf einer Palette abgelegt. Jeder Stapel wird mit zwei nebeneinander angeordneten Fingern bzw. Auflageelementen, sowie einem über diesen befindlichen Stempel, ergriffen. Zudem können die Finger nach dem Lösen eines Hebels verstellt und dadurch der Abstand zwischen dem Anschlag und dem vorderen Ende der sich in der Arbeitsstellung befindlichen Fingern verändert werden. Zur Anpassung an unterschiedliche Formate sind die beiden Finger, auf denen ein Paket auflegbar ist, zueinander verstellbar. Dies ermöglicht eine Anpassung an unterschiedliche Stapelbreiten. Um den Stapel auf eine Palette abzulegen, werden die beiden Auflagefinger hinter einen Anschlag zurückgezogen, so dass der Stapel nach unten frei ist und auf diese Palette fällt. Vorgesehen sind zudem zwei Paare solcher Auflagefinger, so dass gleichzeitig zwei Stapel palettiert werden können. Der Abstand zwischen diesen beiden Stapeln ist verstellbar.

Durch die EP-A-0 816 272 ist ein Stapelgreifer bekannt geworden, der einen nach unten offenen Stapelraum besitzt, der an vier Seiten jeweils eine Führung besitzt. Im unteren Bereich des Stapelraums befinden sich zwei teleskopisch ausfahrbare Bänder. Die Produktstapel werden quer zu diesen Bändern in den Stapelraum eingeführt. Nach dem Einführen des Paketstapels werden die Führungen so verstellt, dass diese den Paketstapel allseitig umgeben und berühren. Der Paketstapel wird auf eine Palette abgelegt, indem die Bänder durch eine Hubbewegung verkürzt werden.

Die WO 86/07579 A beschreibt eine Vorrichtung zum automatischen Transport verpackter Druckerzeugnisse von einer Produktionslinie auf Paletten. Dies geschieht mit Hilfe eines Greifers, der zum Anheben und Absetzen der Druckerzeugnisse eine Vielzahl von Positionen im Raum einnehmen kann. Der Greifer ist mit horizontal angeordneten, ausfahrbaren Schaufeln versehen, deren Länge sich nach Bedarf variieren lässt.

Der Erfindung liegt die Aufgabe zugrunde, einen Paketgreifer der genannten Art zu schaffen, der ohne manuellen Eingriff auf unterschiedliche Paketformate und insbesondere Paketlängen umstellbar ist.

Der erfindungsgemässe Paketgreifer ist dadurch gekennzeichnet, dass zum Verändern des Abstands der Anschlag verstellbar und/oder die Länge des Fingers und/oder des Stempels verstellbar ist.

Der erfindungsgemässe Paketgreifer eignet sich für bedruckte oder unbedruckte Produkte welche ungebunden oder gebunden sein können. Die Produkte können beispielsweise als Paket mit einer Folie oder Bändern zusammengehalten werden. Bei ungebundenen Stapeln können die Produkte durch elektrostatische Aufladung zusammengehalten werden. Unter einem Paket wird hierbei somit auch ein Stapel von losen Produkten verstanden. Die Produkte können unbedruckte Papierbogen oder Druckprodukte wie beispielsweise Druckbogen, einzelne Blätter, Zeitungen, Zeitschriften, Kataloge, Bücher oder dergleichen sein.

Nach einer Weiterbildung der Erfindung ist vorgesehen, dass der Anschlag im Wesentlichen in Längsrichtung des Fingers zur Anpassung an unterschiedliche. Paketformate verstellbar ist. Ein solcher Anschlag kann vergleichsweise schnell und in einem vergleichsweise grossen Bereich verstellt werden. Der Anschlag ist nach einer Weiterbildung der Erfindung ein Anschlagelement mit einer Ausnehmung, in welcher der Finger angeordnet ist. Die Ausnehmung ist vorne offen, so dass der Finger durch diese Ausnehmung hindurch ausfahrbar ist. Vorzugsweise bildet das Anschlagelement zwei im Abstand zueinander angeordnete Anschlagkanten, zwischen denen der Finger und vorzugsweise auch der Stempel bewegbar ist. Dadurch ist es möglich, dass vergleichsweise breite Pakete lediglich mit einem Finger und einem Stempel gefasst und zum Palettieren am Anschlag abgestreift werden können.

Nach einer Variante der Erfindung ist vorgesehen, dass die Gesamtlänge des Fingers und/oder des Stempels zur Anpassung an unterschiedliche Längen der Pakete verstellbar ist. Vorzugsweise ist hierbei der Finger und/oder der Stempel teleskopisch in seiner Länge verstellbar.

Nach einer Weiterbildung der Erfindung ist vorgesehen, dass der Abstand zwischen dem vorderen Ende des Fingers und dem Anschlag und/oder die Länge des Stempels motorisch veränderbar ist. Dies ermöglicht eine besonders schnelle Umstellung an unterschiedliche Formate. Die Verstellung kann beispielsweise über eine Spindel sehr genau erfolgen.

Nach einer Weiterbildung der Erfindung ist vorgesehen, dass der Finger an einem Arm angeordnet ist, der gelenkig ausgebildet ist und mit dem der Finger zwischen den beiden genannten Stellungen bewegbar ist. Mit einem solchen Arm ist es möglich, den Finger in der ersten bzw. zurückgezogenen Stellung schräg anzuordnen. Dies ermöglicht eine besonders raumsparende bzw. kompakte Ausbildung des Paketgreifers. Aus dieser Stellung kann der Finger mit dem Arm schaufelförmig unter ein zu palettierendes Paket geschoben werden. Dadurch erreicht der Finger erst in ausgefahrenem Zustand eine horizontale Lage, wodurch sich der Pressdruck auf das zu greifende Paket erst in diesem Moment aufbaut, was ein Verrutschen der Druckprodukte verhindert. Zum Abstreifen des Pakets wird der Finger unter dem Paket zurückgezogen und in die genannte schräge Stellung gebracht Der Finger kann hierbei vergleichsweise lang sein, so dass mit diesem Pakete mit sehr unterschiedlichen Lägen palettiert werden können.

Nach einer Weiterbildung der Erfindung ist vorgesehen, dass der Paketgreifer zwei Greifereinheiten mit jeweils einem Finger, einem Stempel und einem Anschlag aufweist. Wahlweise kann gleichzeitig mit jeder Greifereinheit ein Paket oder mit beiden Greifereinheiten lediglich ein vergleichsweise breites Paket palettiert werden. Die beiden Pakete können unterschiedliche Formate und Dicken aufweisen.

Nach einer Weiterbildung der Erfindung ist vorgesehen, dass die genannten beiden Greifereinheiten verschiebbar am Gestell gelagert sind, so dass der Abstand zwischen diesen beiden Greifereinheiten veränderbar ist. Werden jeweils zwei Pakete gefasst, so kann zum Palettieren der Abstand zwischen diesen Paketen verändert werden. Beispielsweise können diese beiden Pakete im Wesentlichen aneinander angelegt werden. Die Lage der Greifer kann an spezielle Gegebenheiten der zu palettierenden Druckprodukten angepasst werden, so dass die Greifer nicht zwingend symmetrisch zur Stapelmitte ausgerichtet sein müssen. Dies ist insbesondere dann notwendig, wenn beispielsweise Warenmuster in Druckprodukte eingebracht wurden; welche keinem Druck ausgesetzt werden dürfen.

Das erfindungsgemässe Verfahren ist dadurch gekennzeichnet, dass bei einem Wechsel des Paketformats der Abstand zwischen dem Anschlag und dem vorderen Ende des sich in der Arbeitsstellung befindlichen Fingers verändert wird, indem der Anschlag und/oder die Länge des Fingers und/oder die Länge des Stempels verändert wird. Der Formatwechesel kann auch unmittelbar nach dem Palettiern eines Paketes erfolgen, während dem sich der Paketgreifer in die Position bewegt, in der mindestens ein nächstes Paket übernommen wird. So wird eine Verarbeitung von unterschiedlichsten Paketen ohne Produktionsunterbruch möglich. Vergleichsweise breite Pakete werden vorzugsweise mit zwei Fingern und zwei Stempeln gefasst, während vergleichsweise schmale Pakete zwischen einem Finger und einem Stempel gefasst werden können. Mit diesem Verfahren können Pakete mit sehr unterschiedlichen Formaten und insbesondere sehr unterschiedlichen Längen palettiert werden. Beispielsweise sind Paketlängen B von 140 - 500 mm und Paketbreiten A von 95 - 340mm bei Doppelproduktionen und Paketbreiten A von 340 bis 520mm bei Einfachproduktionen möglich.

Weitere vorteilhafte Merkmale ergeben sich aus den abhängigen Patentansprüchen, der nachfolgenden Beschreibung sowie der Zeichnung.

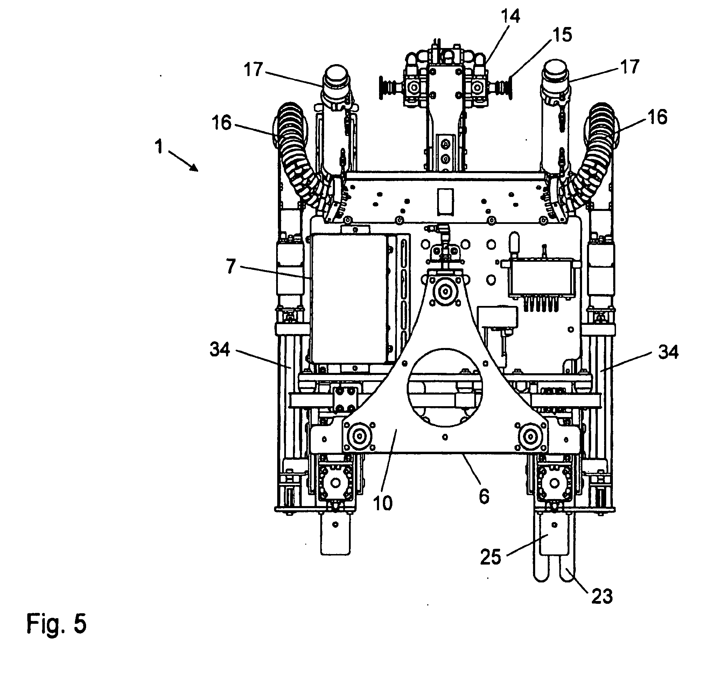

Ein Ausführungsbeispiel der Erfindung wird nachfolgend anhand der Figuren 1 bis 8 näher erläutert. Es zeigen:
- Fig. 1: eine räumliche Ansicht eines erfindungsgemässen Paketgreifers
- Fig. 2: eine Seitenansicht des Paketgreifers, wobei ein vergleichsweise langes Paket gefasst ist,
- Fig. 3: eine Ansicht gemäss Figur 2, jedoch mit einem vergleichsweise kurzen Paket,
- Fig. 4: eine Ansicht des erfindungsgemässen Paketgreifers von vorne,
- Fig. 5: eine Ansicht des erfindungsgemässen Paketgreifers von oben,
- Fig. 6: eine Seitenansicht eines erfindungsgemässen Paketgreifers gemäss einer Variante, wobei dieser ein vergleichsweise langes Paket fasst,
- Fig. 7: eine Ansicht gemäss Figur 6, jedoch mit einem vergleichsweise kurzen Paket und
- Fig. 8: eine räumliche Ansicht einer Palette mit palet- tierten Paketstapel,
- Fig. 9: eine Ansicht des erfindungsgemässen Paketgreifers von oben mit Paketen unterschiedlicher Grösse.

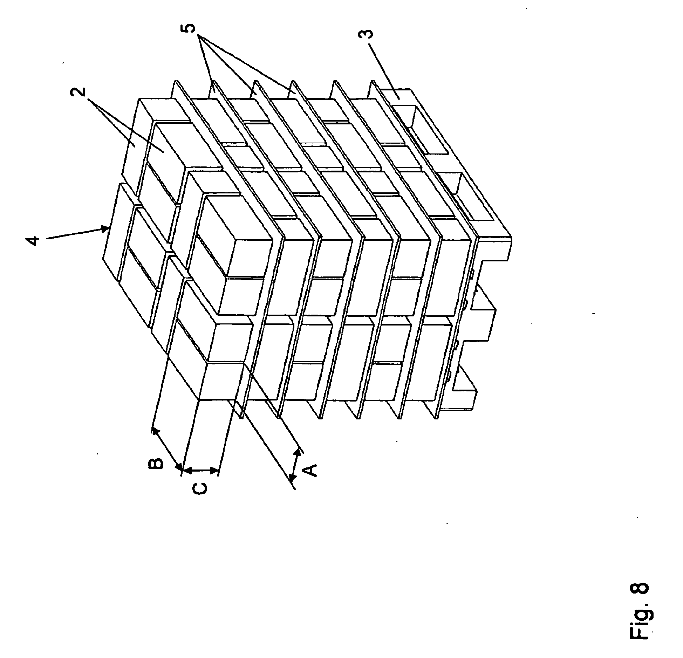

Der Paketgreifer 1 besitzt ein Gestell 6 mit einer Platte 10, mit welcher dieser in einer hier nicht gezeigten Palettiervorrichtung so gelagert ist, dass der Paketgreifer 1 vorzugsweise in sämtlichen Raumrichtungen bewegt werden kann. Diese Palettiervorrichtung besitzt in an sich bekannter Weise eine Zuführvorrichtung für Pakete, die beispielsweise als einfacher Bandförderer ausgebildet sein kann. Innerhalb der Palettiervorrichtung befindet sich zudem eine Beladeposition, an welcher eine in Figur 8 gezeigte Palette 3 mit einer Mehrzahl von Paketen 2 und Zwischenpappen 5 zu einer Paketlage 4 palettiert werden kann. Die Palettiervorrichtung, Zuführvorrichtung und die Palette 3 können in an sich bekannter Weise ausgebildet sein. Mit dem Paketgreifer 1 werden die mit der Zuführvorrichtung bereitgestellten Pakete 2 gefasst und zur Palette 3 transportiert und auf dieser in bestimmter Anordnung abgelegt. Die Pakete 2 bestehen aus Druckprodukten 9, beispielsweise Druckbogen, Zeitungen, Broschüren, Katalogen, Bücher und dergleichen.

Die Pakete 2 können ungebunden oder gebunden sein. Sie besitzen jeweils eine bestimmte Breite A, eine bestimmte Länge B und eine bestimmte Höhe C. In der Regel sind diese Pakete 2 rechteckig. Die genannten Masse können sehr unterschiedlich sein, beispielsweise kann die Paketlänge B 140 - 500 mm, die Paketbreite A 95 - 340 mm und die Pakethöhe bis 350 mm betragen. Denkbar sind grundsätzlich aber auch kleinere oder grössere Paketformate. Die Ausrichtung der Produkterücken der einzelnen Produkte müssen bei zwei aufeinanderfolgenden Paketen nicht zwingend parallel sein. Der Paketgreifer 1 ist vorzugsweise so ausgebildet, dass das Palettieren automatisch erfolgt. Zur Steuerung ist am Gestell 6 hierzu eine Steuervorrichtung 7 gelagert. Für die zur Versorgung und Steuerung erforderlichen Kabel und Leitungen sind Kabelführungen 16 vorgesehen.

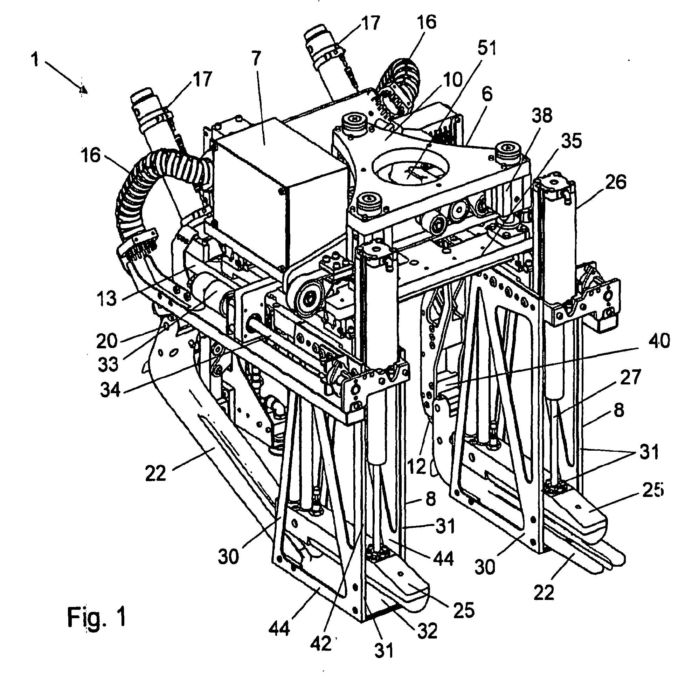

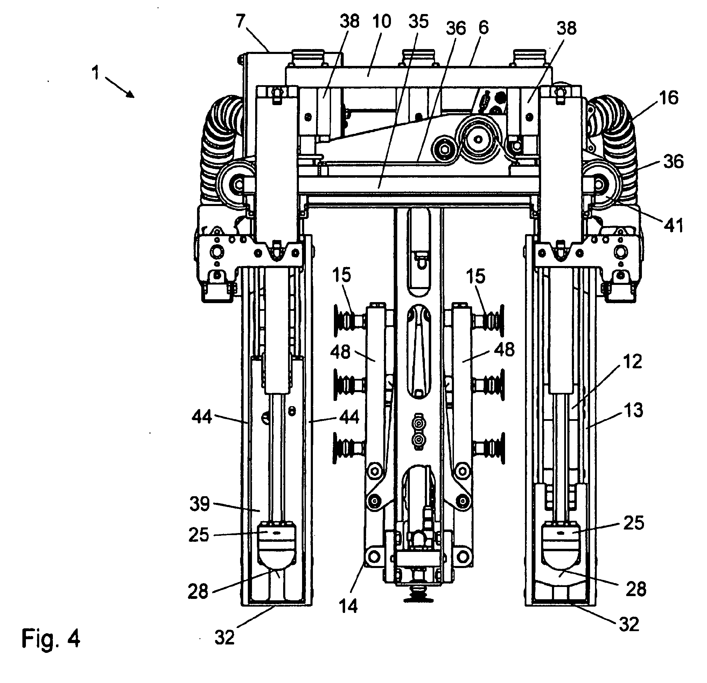

Der Paketgreifer 1 besitzt zum Greifen und Ablegen der Pakete 2 zwei Einheiten 8, die an einem in Figur 1 gezeigten Träger 35 und einem hier nicht sichtbaren Träger horizontal verschieblich geführt sind. Die Träger 35 sind mit Streben 38 fest mit der Platte 10 verbunden. Die Einheiten 8 sind jeweils an einer quer zum Träger 35 horizontal verlaufende Lagerschiene 13 gelagert, die mit Führungselementen 11 jeweils mit dem Träger 35 sowie dem weiteren Träger verbunden sind. Zum Verschieben der Einheiten 8 zueinander ist gemäss Figur 4 ein Antriebsband 36 vorgesehen, das um Rollen 41 gelegt und mit einem in Figur 1 gezeigten Mitnehmer 37 mit der einen Einheit 8 und mit einem hier nicht gezeigten weiteren Mitnehmer mit der zweiten Einheit 8 verbunden ist. Ist das Antriebsband 36 über einen Antrieb 51 angetrieben, so werden je nach Richtung, in welcher das Antriebsband 36 angetrieben ist, die beiden Einheiten 8 gegeneinander hin- oder voneinander wegbewegt. Die Bewegungen der Einheiten 8 sind gemäss Figur 4 spiegelbildlich. Anstelle des Antriebsbands 36 kann auch ein anderer geeigneter Antrieb vorgesehen sein, mit denen die beiden Einheiten 8 bewegt werden können. Beispielsweise könnte hier auch ein Spindelantrieb oder ein Antrieb mit einem Zylinder vorgesehen sein. Bei separatem Antrieb der beiden Einheiten 8 sind voneinander unabhängige Bewegungen der Greifereinheiten 8 möglich, womit die Bewegungsrichtung auch identisch sein kann. Die Bewegungen der Einheiten 8 sind ebenfalls vorzugsweise über die Steuervorrichtung 7 gesteuert.

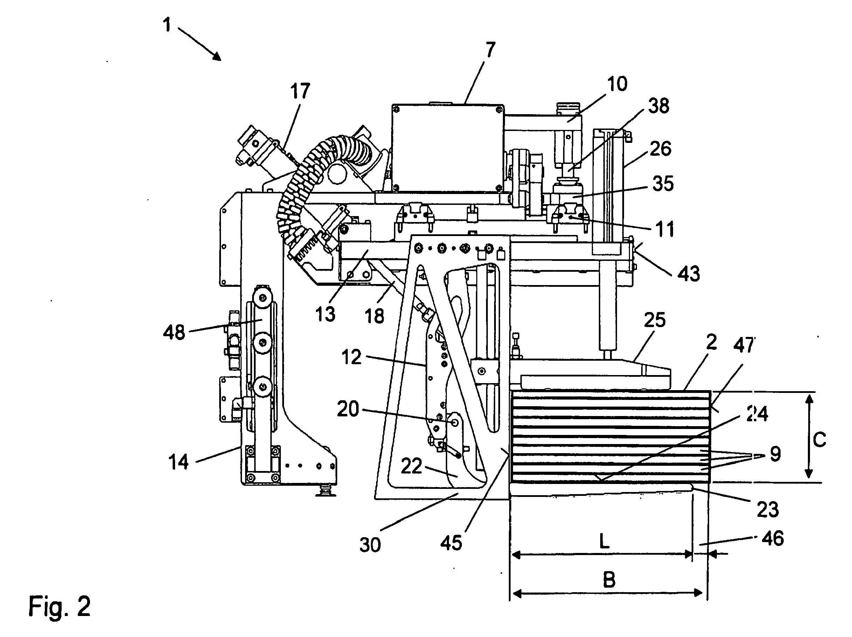

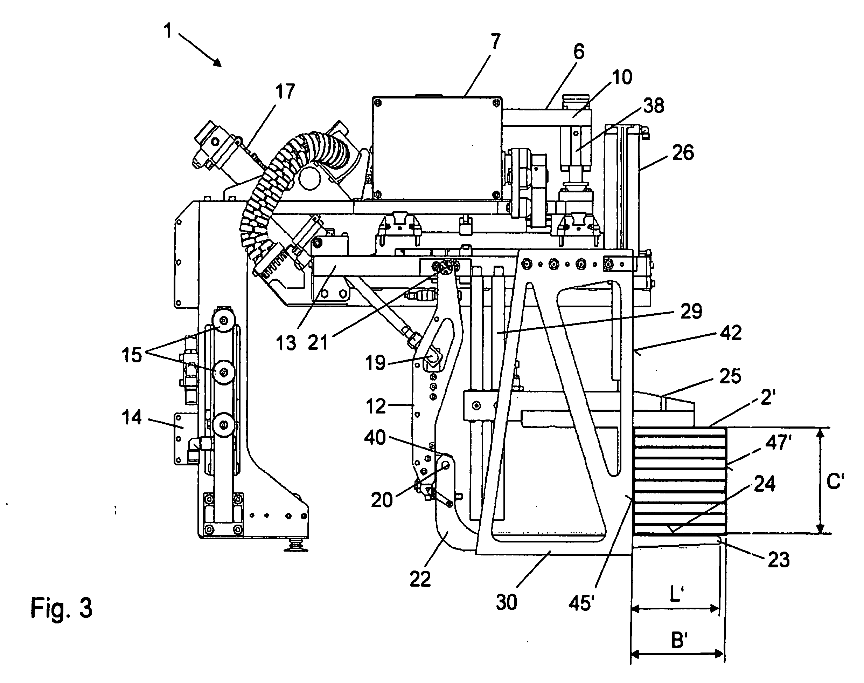

Die Einheiten 8 weisen jeweils ein Anschlagelement 30 auf, das jeweils horizontal verschiebbar an einer der Lagerschienen 13 gelagert ist. Zum Verschieben der Anschlagelemente 30 sind zwei Antriebe 33 vorgesehen, die jeweils über eine Spindel 34 mit einem Anschlagelement 30 verbunden sind. Diese Antriebe 33 sind am Gestell 6 abgestützt. Die Figuren 2 und 3 zeigen das vordere Anschlagelement 30 in unterschiedlichen Stellungen. In diesen ist der Abstand einer in den Figuren 2 und 3 gezeigten Anschlagfläche 42 zu einer Frontseite 43 der Lagerschienen 13 unterschiedlich. In der Figur 2 ist dieser Abstand wesentlich grösser als in der Figur 3. In und zwischen diesen Stellungen sind die Anschlagelemente 30 durch Drehen der Spindel 34 exakt positionierbar und fixierbar. Die Anschlagelemente 30 der beiden Greifereinheiten 8 können dabei unterschiedliche Positionen zueinander einnehmen.

Die Anschlagelemente 30 besitzen jeweils gemäss Figur 1 eine untere Wandung 32 sowie zwei vertikal verlaufende Seitenwandungen 44. Zwischen diesen Seitenwandungen 44 besitzen die Anschlagelemente 30 gemäss Figur 4 jeweils eine vorne und hinten offene Ausnehmung 39. Frontseitig bilden diese Seitenwandungen 44 jeweils eine Anschlagkante 31, die sich jeweils im Wesentlichen vertikal erstreckt. Diese Kanten 31 sind entsprechend der Ausnehmung 39 im Abstand zueinander und im Wesentlichen parallel zueinander angeordnet. Die beiden Anschlagelemente 30 sind an den Lagerschienen 13 so gelagert, dass die beiden Anschlagkanten 31 in allen Positionen im Wesentlichen vertikal verlaufen.

An den beiden Lagerschienen 13 ist jeweils schwenkbar ein Arm 12 gelagert. Diese Arme 12 sind jeweils an einem oberen Ende mit einem an der Lagerschiene 13 gelagerten Stellzylinder 17 oder einem anderen geeigneten Antrieb um jeweils ein Gelenk 21 verschwenkbar. Die Gelenke 21 sind vorzugsweise Drehgelenke und jeweils an der Lagerschiene 13 im Verschiebebereich der Anschlagelemente 30 angeordnet. Die Stellzylinder 17 besitzen jeweils eine Kolbenstange 18, die an einem vorderen Ende über ein Drehgelenk 19 schwenkbar mit dem Arm 12 verbunden ist. Im Abstand zu diesen Drehgelenken 19 ist jeweils über eine Gelenkverbindung 40 und ein Gelenk 20 am Arm 12 ein Finger 22 gelagert, der im Abstand zu dieser Gelenkverbindung 40 ein vorderes freies Ende 23 besitzt. Die Finger 22 und die vorderen Enden 23 bilden zusammen jeweils eine Auflagefläche 24, auf welcher gemäss den Figuren 2 und 3 ein Paket 2 bzw. 2' aufliegt.

Durch Betätigen der Stellzylinder 17 sind die beiden Finger 22 jeweils zwischen einer horizontalen Ausrichtung und einer geneigten schaufelartigen Ausrichtung bewegbar. Bei der in Figur 1 vorne gezeigten Stellung ist der Finger 22 wie ersichtlich hinten angehoben. In dieser Stellung befindet sich der Finger 22 in einer zurückgezogenen Stellung, in welcher sich das freie Ende 23 hinter der Anschlagfläche 42 befindet. In der in den Figuren 2 und 3 gezeigten Stellung ragen die beiden Finger 22 jeweils bereichsweise und mit unterschiedlichen Längen über die Anschlagflächen 42 hinaus. In den Figuren 2 und 3 befinden sich die Finger 22 in der Arbeitsstellung. In den Figuren 2 und 3 ist die Länge L, mit welcher die Finger 22 über die Anschlagfläche 42 hinausragen, mit dem Doppelpfeil L angegeben. Die Länge L wird bestimmt durch die Position der Anschlagelemente 30 bzw. der Anschlagflächen 42 sowie des vorderen Endes 23 des Fingers 22 relativ zu den Frontseiten 43 der Lagerschienen 13. Die Länge L beträgt in der Stellung gemäss Figur 2 beispielsweise 500 mm und in der Figur 3 beträgt die wesentlich kürzere Länge L' beispielsweise 140 mm. Selbstverständlich ist auch jede Zwischenlänge einstellbar.

Über jeden sich in Arbeitsstellung befindlichen Finger 22 ist zudem ein Stempel 25 angeordnet, der an Führungsstangen 29 vertikal geführt ist. Diese Stempel 25 können jeweils mit einem Stellzylinder 26 oder einem anderen geeigneten Antrieb vertikal verstellt werden. Beide Stempel 25 ragen jeweils in eine Ausnehmung 39 hinein und sind vorzugsweise unwesentlich kürzer als die Finger 22. Die Stempel 25 dienen dazu, jeweils mit einem Finger 22 ein Paket 2 bzw. 2' festzuhalten, so dass das Paket 2 bzw. 2' durch entsprechende Bewegungen des Paketgreifers 1 mit diesen von der Zuführvorrichtung zur Palette 3 transportiert werden kann. Hierbei liegt das Paket 2 bzw. 2' mit einer Rückseite 45 bzw. 45' an einer Anschlagfläche 42 an. Das freie Ende 23 befindet sich vorzugsweise gemäss den Figuren 2 und 3 hinter einer Frontseite 47 des Pakets 2 bzw. 2', so dass die Pakete 2 bzw. 2' jeweils einen Überhang 46 besitzen. Die Länge dieses Überhangs beträgt beispielsweise 4 - 5 cm. Der Überhang 46 kann aber auch kleiner oder grösser oder sogar Null sein.

Am Gestell 6 ist zudem ein Zwischenpappengreifer 14 angeordnet, mit dem aus einem hier nicht gezeigten Zwischenpappenmagazin jeweils eine Zwischenpappe 5 entnommen und auf der Palette 3 abgelegt werden kann. Zum Greifen der Zwischenpappen 5 oder anderen geeigneten Zwischenlagen besitzt der Zwischenpappengreifer 14 eine Mehrzahl von Saugern 15, die jeweils an einem flügelartig ausstellbaren Arm 48 angeordnet sind. Der Zwischenpappengreifer 14 ist ebenfalls über die Steuervorrichtung 7 gesteuert. Grundsätzlich ist dieser Zwischenpappengreifer 14 jedoch nicht zwingend. Er könnte auch durch eine andere nicht am Paketgreifer 1 angeordnete Vorrichtung ersetzt sein.

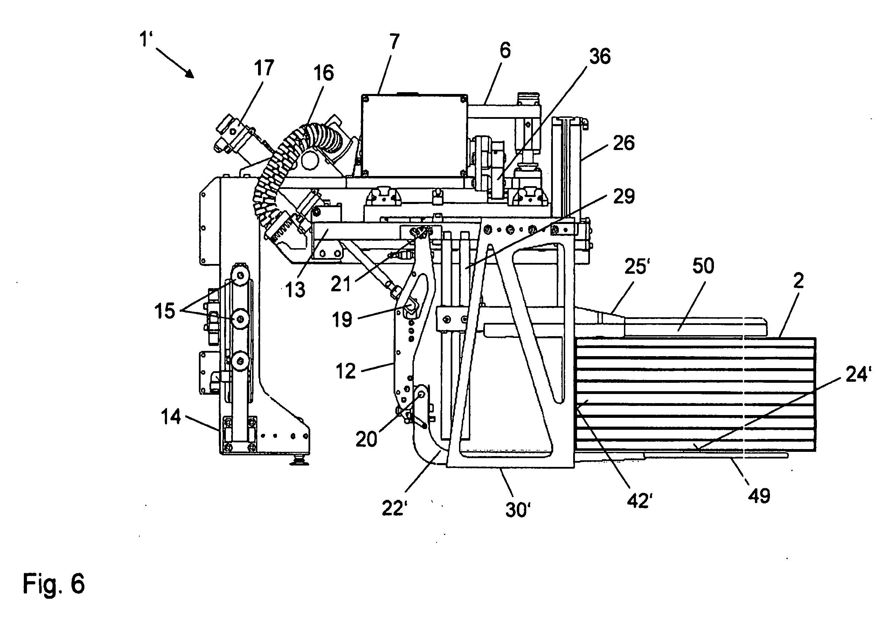

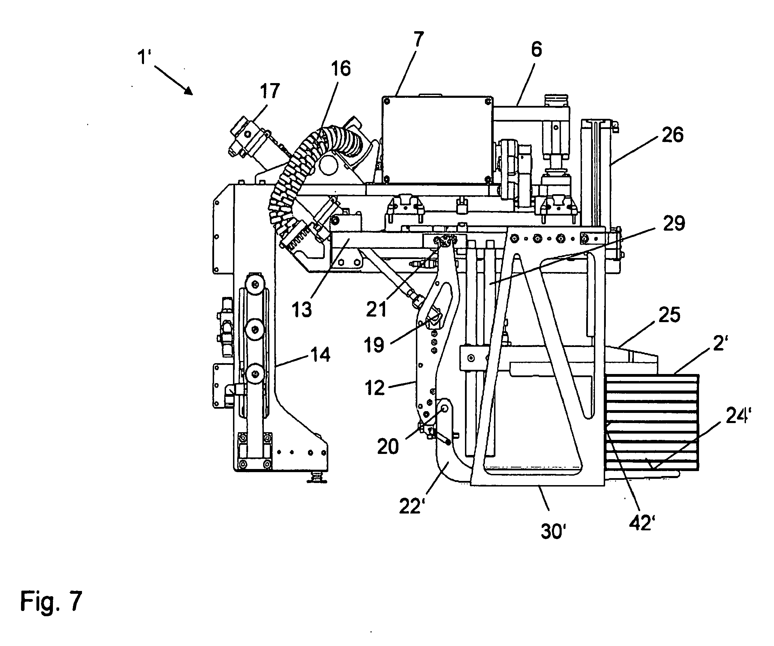

Die Figuren 6 und 7 zeigen einen alternativen Paketgreifer 1', der sich vom Paketgreifer 1 im Wesentlichen dadurch unterscheidet, dass der Finger 22' an einem vorderen Ende eine teleskopisch ausfahrbare Nase 49 besitzt. Ebenfalls besitzt der Stempel 25' eine ähnliche ausfahrbare Nase 50. Die beiden Nasen 49 und 50 sind mit einem geeigneten Antrieb, beispielsweise mit hier nicht gezeigten Zylindern zwischen der in Figur 6 gezeigten ausgefahrenen Position und der in Figur 7 gezeigten eingefahrenen Position verstellbar. Die Verstellbewegungen sind ebenfalls mit der Steuervorrichtung 7 gesteuert. Die Arme 22' und die Stempel 25' können zur Anpassung an die Länge des Pakets 2 bzw. 2' verkürzt bzw. verlängert werden. Die Arme 22' und 25' überragen dann somit mit unterschiedlichen Lägen die Anschlagflächen 42' der Anschlagelemente 30'. Die Anschlagelemente 30' können hierbei in einer festen vorderen Position verharren, wie die Figuren 6 und 7 zeigen. Beim Paketgreifer 1' können die Anschlagelemente 30' fest am Gestell 6 bzw. an den Lagerschienen 13 befestigt sein. Eine Ausführung, bei welcher diese Anschlagelemente 30' wie bei Paketgreifer 1 verschiebbar sind, ist jedoch auch denkbar. In diesem Fall kann noch ein grösserer Bereich unterschiedlich langer Pakete 2 bzw. 2' abgedeckt werden. Denkbar ist auch eine Kombination von Ausführung des Paketgreifers 1 mit Paketgreifer 1', bei dem die Verstellung von Greifer 22' und Nase 49, respektive Stempel 25' und Nase 50 manuell erfolgt.

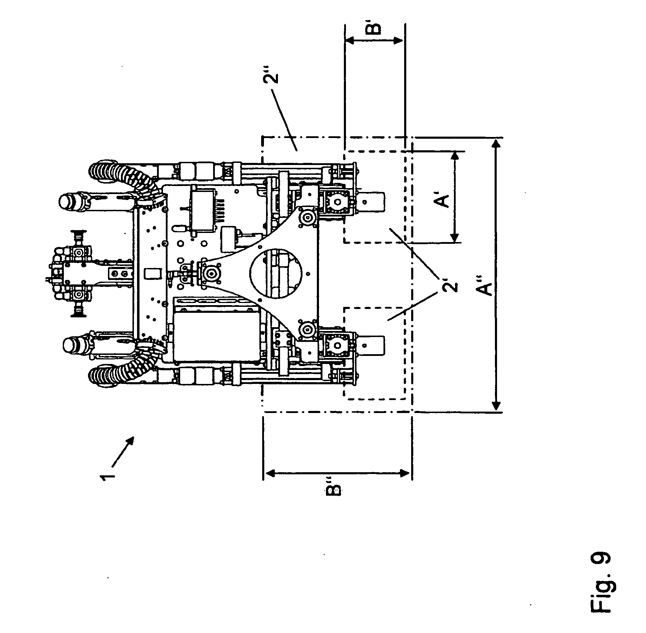

Sowohl beim Paketgreifer 1 als auch beim Paketgreifer 1' kann mit jeder Einheit 8 ein Paket 2 bzw. 2' gefasst und palettiert werden. Die Pakete 2 bzw. 2' werden jeweils zwischen einem Finger 22 bzw. 22' und einem Stempel 25 bzw. 25' festgehalten. Der Abstand zwischen diesen Paketen 2 bzw. 2' ist wie oben erläutert durch ein Verschieben der Einheiten 8 einstellbar. Pakete 2" mit einer sehr grossen Paketbreite A" können jedoch auch wie in Figur 9 gezeigt von beiden Einheiten 8 festgehalten werden. In diesem Fall wird das Paket 2" somit von zwei Fingern 22 bzw. 22' und zwei Stempeln 25 bzw. 25' gehalten. Die Pakete 2 bzw. 2' oder 2", die mit dem Paketgreifer 1 bzw. 1' palettiert werden können, können somit sehr unterschiedlich lang und unterschiedlich breit als auch unterschiedlich hoch sein. Dabei muss die Position der Greifereinheiten 8 nicht zwingend symmetrisch zur halben Breite B bzw. B' oder B" des Pakets 2 bzw. 2' oder 2" sein.

Die Paketgreifer 1 und 1' besitzen jeweils zwei Greifeinheiten 8. Grundsätzlich ist hier doch auch eine Ausführung denkbar, bei welcher lediglich eine oder mehr als zwei Einheiten 8 vorgesehen sind.

Die Arbeitsweise des Paketgreifers 1 wird nachfolgend näher erläutert.

In der Ausgangsstellung ist der Paketgreifer 1 mit den Anschlagflächen 42 vor einer hier nicht gezeigten Zuführvorrichtung positioniert. Die beiden Finger 22 befinden sich in der zurückgezogenen Position gemäss Figur 1 links und die Stempel 25 in einer angehobenen Position. Mit der Zuführvorrichtung werden die beiden Pakete 2 bzw. 2' vertikal zu den Anschlagflächen 42 zu diesen hingefördert und an diesen angelegt. Die beiden Finger 22 werden nun durch entsprechendes Verschwenken der Arme 12 in die in Figur 1 rechts gezeigte Arbeitsstellung gefahren. Die Finger 22 untergreifen hierbei schaufelartig jeweils ein Paket 2 bzw. 2'. Die beiden Anschlagelemente 30 sind hierbei so positioniert, dass der gewünschte Überhang 46 vorhanden ist. Durch Senken der beiden Stempel 25 bzw. 25' werden die Pakete 2 bzw. 2' geklemmt. Die Stempel 25 bzw. 25' können dabei eine obere Ausgangsposition aufweisen, die der Pakethöhe C angepasst werden kann. Die Zeitdauer für das Absenken der Stempel 25 bzw. 25' auf die Pakete 2, 2', 2" kann damit verkürzt werden. Die obere Ausgangsposition der Stempel 25 bzw. 25' kann von der Steuervorrichtung 7 beispielsweise so gewählt werden, dass sich der Stempel 25 bzw. 25' vor dem Absenken zwischen 50 und 100 mm über dem Paket befindet. Dazu ist es erforderlich, dass die Pakethöhe C von einer der Palettiervorrichtung vorgeschalteten Verarbeitungseinrichtung der Steuervorrichtung 7 übermittelt bzw. direkt im Paketgreifer bestimmt wird. Der Paketgreifer 1 wird nun in der Palettiervorrichtung beispielsweise mit einem an sich bekannten Roboterarm in die Palettierposition bewegt. Hierbei kann der Abstand zwischen den beiden Einheiten 8 während dem Verfahren der Greifereinheit 1 verstellt werden. Beispielsweise können die beiden Pakete 2 bzw. 2' nahe zueinander gebracht werden, so dass sie schliesslich durch Zurückziehen der beiden Finger 22 und leichtem Anheben der beiden Stempel 25 auf die Palette 3 bzw. auf eine Zwischenpappe 5 abgelegt werden können. Das Ablegen der Pakete 2, 2', 2" auf die Palette 3 kann auch derart erfolgen, dass die Palette 2, 2', 2" durch verschieben des Anschlagelements 30 von den Fingern 22 auf die Zwischenpappe 5 geschoben werden. Hierzu ist es notwendig, dass die Bewegung des Anschlagelements 30 durch die den Paketgreifer 1 haltende Palettiervorrichtung kompensiert wird. Die abzulegenden Pakete 2, 2', 2" stehen so in Bezug zur Palette 3 still. Der Paketgreifer 1 wird nun wieder in die Ausgangsstellung bewegt, wobei gleichzeitig die Finger 22 und der Stempel 25 in die Ausgangspositionen bewegt werden. Ebenfalls können die Greifereinheiten 8, sowie die Anschlagelemente 30 auf neue Paketformate voreingestellt werden, falls dies für den nächstfolgenden Greifvorgang notwendig wird.

Sollen nachfolgende Pakete 2 bzw. 2' mit einem anderen Format palettiert werden, so werden entsprechend die Anschlagelemente 30 und/oder die Greifereinheiten 8 verstellt. Bei grösseren Paketlängen B werden die Anschlagelemente 30 nach hinten und bei kleineren Paketlängen B nach vorne bewegt, wie dies in den Figuren 2 und 3 gezeigt ist. Analog verhält es sich bei der Verstellung der Greifereinheiten 8, welche bei grösseren Paketbreiten A weiter auseinander, bzw. bei kleineren Paketbreiten A näher zueinander bewegt werden. Eine Umstellung von zwei kleinen Paketen 2' nebeneindander zu einem grösseren Paket 2, 2" ist ebenfalls denkbar. Diese Bewegungen können wie oben erläutert automatisch bzw. mit einem Antrieb gesteuert durchgeführt werden. Die Umstellung auf ein anderes Format kann somit sehr schnell während der laufenden Produktion und ohne manuellen Eingriff erfolgen. Die nachfolgenden Schritte zum Palettieren erfolgen wie oben erläutert. Werden vergleichsweise kleine Pakete 2' mit einer kleinen Paketlänge B' verarbeitet, so können die Anschlagelemente 30 nach hinten bewegt werden und jeweils zwei Pakete 2' hintereinander mit einer Greifereinheit 8 festhalten, transportieren und auf einer Palette 3 ablegen. Die Frontseite 47' des hinteren Paketes 2' berührt dabei die Rückseite 45' des vorderen, zweiten Paketes 2'.

Die unterschiedlichen Anordnungen von auf Paletten 3 abgelegten Paketen 2, 2" machen erforderlich, dass teilweise nur eine der beiden Greifereinheiten 8 genutzt werden kann.

Der Paketgreifer 1' kann zum Palettieren grundsätzlich wie oben erläutert betrieben werden. Bei einer Formatumstellung werden hier jedoch vorzugsweise nicht die Anschlagelemente 30 verschoben, sondern lediglich die Nasen 49 bzw. 50 unterschiedlich weit ausgefahren. Eine Kombination der Verfahren mit Paketgreifer 1 und 1' ist denkbar, womit ein noch grösserer Formatbereich abgedeckt werden könnte.

## Patentansprüche

1. Paketgreifer für eine Palettiervorrichtung, mit der jeweils wenigstens ein Paket (2, 2') bedruckter oder unbedruckter Produkte von einer Zuführvorrichtung übernehmbar und auf einer Palette (3) ablegbar ist, mit einem Gestell (6) und mit wenigstens einem am Gestell gelagerten Finger (22, 22'), der zwischen einer ersten und einer zweiten Position bewegbar ist, wobei der Finger (22, 22') sich in der ersten Position hinter einem Anschlag (42) und in der zweiten Position zumindest bereichsweise vor dem Anschlag (42) in einer horizontalen Arbeitsstellung befindet, in welcher das wenigstens eine Paket (2, 2') mit dem Finger (22, 22') aufnehmbar ist, und mit einem Stempel (25, 25'), mit dem das auf dem Finger (22, 22') aufliegende und am Anschlag (42) anliegende Paket (2 bzw. 2') klemmbar ist, wobei der Abstand (L) zwischen dem Anschlag (42) und einem vorderen Ende (23) des sich in der Arbeitsstellung befindlichen Fingers (22, 22') zur Anpassung an unterschiedliche Längen B der Pakete (2 bzw. 2') veränderbar ist, wobei zum Verändern des Abstands (L)
a. der Anschlag (42) verstellbar ist, wobei der Anschlag (42) zur Anpassung an unterschiedliche Paketformate und insbesondere Paketlängen B im Wesentlichen horizontal verstellbar ist und/oder
b. die Länge des Fingers (22, 22') verstellbar ist, wobei ein vorderes Ende (23) des fingers (22') zur Anpassung an unterschiedliche Formate und insbesondere Längen der Pakete (2 bzw. 2') verstellbar ist indem der Finger (22') teleskopisch in seiner Länge verstellbar ist und/oder
c. die Länge des Stempels (25') verstellbar ist, wobei ein vorderes Ende des Stempels (25') zur Anpassung an unterschiedliche Paketformate veränderbar ist.

2. Paketgreifer nach Anspruch 1, **dadurch gekennzeichnet, dass** der Abstand zwischen dem vorderen Ende (23) des Fingers (22, 22') und dem Anschlag (42) und/oder die Länge des Stempels (25') motorisch verstellbar ist.

3. Paketgreifer nach einem der Ansprüche 1 oder 2, **dadurch gekennzeichnet, dass** der Finger (22, 22') an einem Arm (12) angeordnet ist, der gelenkig ausgebildet ist und mit dem der Finger (22, 22') zwischen der genannten ersten und der genannten zweiten Stellung bewegbar ist.

4. Paketgreifer nach Anspruch 3, **dadurch gekennzeichnet, dass** der Finger (22, 22') mit dem Arm (12) so bewegbar ist, dass er in der ersten Stellung bzw. in einer zurückgezogenen Stellung schaufelartig angehoben ist.

5. Paketgreifer nach einem der Ansprüche 1 bis 4, **dadurch gekennzeichnet, dass** er mindestens zwei Greifereinheiten (8) mit jeweils einem Finger (22, 22'), einem Stempel (25, 25') und einem Anschlag (42) aufweist.

6. Paketgreifer nach Anspruch 5, **dadurch gekennzeichnet, dass** die mindestens zwei Greifereinheiten (8) verschiebbar am Gestell (6) gelagert sind, so dass der Abstand zwischen diesen Greifeinheiten (8) veränderbar ist.

7. Paketgreifer nach einem der Ansprüche 1 bis 6, **dadurch gekennzeichnet, dass** der Anschlag (42) durch ein Anschlagelement (30) gebildet wird, das eine Ausnehmung (39) besitzt, in welche der Finger (22, 22') wenigstens bereichsweise angeordnet ist.

8. Paketgreifer nach Anspruch 7, **dadurch gekennzeichnet, dass** das Anschlagelement (30) zwei im Abstand zueinander angeordnete Anschlagkanten (31) aufweist, zwischen denen der Finger (22, 22') in der Arbeitsstellung angeordnet ist.

9. Paketgreifer nach Anspruch 7 oder 8, **dadurch gekennzeichnet, dass** der Stempel (25, 25') ebenfalls in der genannten Ausnehmung (39) des Anschlagelements (30) über dem Finger (22, 22') angeordnet ist.

10. Verfahren zum Palettieren von Paketen (2, 2') aus bedruckten oder unbedruckten Produkten mit Hilfe einer Palettiervorrichtung, die wenigstens einen Paketgreifer (1, 1') aufweist, der zum Greifen und Transportieren von jeweils wenigstens einem Paket (2, 2') einen Anschlag (42) aufweist, an dem das Paket (2, 2') angelegt wird, wobei das am Anschlag (42) angelegte Paket (2, 2') mit einem Finger (22, 22') und einem Stempel (25, 25') gefasst und zu eine Palette (3) transportiert und dort abgelegt wird, wobei der Finger (22, 22') zum Greifen des wenigstens einen Pakets (2, 2') von einer ersten Stellung in eine zweite Stellung bewegbar ist und sich in dieser ersten Stellung der Finger (22, 22') hinter dem Anschlag (42) und in der zweiten Stellung zumindest bereichsweise vor dem Anschlag (42) befindet, wodurch bei einer Änderung einer Paketlänge (B) ein Abstand (L, L') zwischen dem Anschlag (42) und einem vorderen Ende (23) des sich in der Arbeitsstellung befindlichen Fingers (22, 22') verändert wird, indem
a. der Anschlag (42) verändert wird, wobei der Anschlag (42) zur Anpassung an unterschiedliche Paketformate und insbesondere Paketlängen B im Wesentlichen horizontal verstellt wird, und/oder
b. die Länge des Fingers (22, 22') verändert wird, wobei ein vorderes Ende (23) des Fingers (22') zur Anpassung an unterschiedliche Formate und insbesondere Längen der Pakete (2 bzw. 2') verstellt wird indem der Finger (22') teleskopisch in seiner Länge verstellt wird und/oder
c. die Länge des Stempels (25, 25') verändert wird, wobei ein vorderes Ende des Stempels (25') zur Anpassung an unterschiedliche Paketformate veränderbar ist.

11. verfahren nach Anspruch 10, **dadurch gekennzeichnet, dass** der Abstand (L, L') zwischen dem Anschlag (42) und dem vorderen Ende (23) des Fingers (22, 22') motorisch verändert wird.

12. Verfahren nach Anspruch 10 oder 11, **dadurch gekennzeichnet**, das zum Verändern des genannten Abstands (L, L') ein Anschlagelement (30) verschoben und/oder ein vorderes Ende des Fingers (22, 22') verändert wird.

13. Verfahren nach einem der Ansprüche 10 bis 12, **Dadurch gekennzeichnet, dass** der genannte Abstand (L, L') so eingestellt wird, dass das gefasste Paket (2, 2') bezüglich des vorderen Endes des Fingers (22, 22') einen vorbestimmten überhang (46) aufweist.

14. Verfahren nach einem der Ansprüche 10 bis 13, **dadurch gekennzeichnet, dass** der Finger (22, 22') an einem beweglichen Arm (12) angeordnet ist, dass in einem ersten Schritt das Paket (2, 2') mittels einer Zuführvorrichtung am genannten Anschlag (42) angelegt wird, dass in einem zweiten Verfahrensschritt das Paket (2, 2') mit dem Finger (22, 22') untergriffen wird und dass in einem dritten Schritt das Paket (2, 2') mit dem Stempel (25, 25') geklemmt wird.

15. verfahren nach einem der Ansprüche 10 bis 14, **dadurch gekennzeichnet, dass** die obere Ausgangsposition des Stempels (25, 25') nach dem Palettieren resp. vor dem Erfassen eines Paketes (2, 2') an die Höhe des nächsten Paketes (2, 2') angepasst wird.

16. Verfahren nach einem der Ansprüche 10 bis 15, **dadurch gekennzeichnet, dass** der Finger (22, 22') in der ersten Stellung schaufelartig schräg nach hinten angehoben und in der zweiten Stellung im Wesentlichen horizontal ausgerichtet ist.

17. Verfahren nach einem der Ansprüche 10 bis 16, **dadurch gekennzeichnet, dass** das Paket (2, 2') zwischen lediglich einem Finger (22, 22') und einem Stempel (25, 25') gefasst wird.

18. Verfahren nach einem der Ansprüche 10 bis 17, **dadurch gekennzeichnet, dass** die Verstellbewegungen des Anschlags (30) und/oder der Finger (22, 22') und/oder der Stempel (25, 25') nach dem Palettieren resp. vor dem Erfassen eines weiteren Paketes (2, 2') erfolgen.

## Claims

1. Pack gripper for a palletizing apparatus by means of which at least one pack (2, 2') at a time of printed or unprinted products can be transferred from a feed apparatus and placed on a pallet (3), with a support frame (6) and at least one finger (22, 22') mounted on the support frame that is movable between a first position and a second position such that the finger (22, 22') when in the first position is located behind a stop (42) and when in the second position is located at least partially in front of the stop (42) in a horizontal working position in which the at least one pack (2, 2') can be picked up with the finger (22, 22'); and with a pad (25, 25') for clamping the pack (2 or 2') resting on the finger (22, 22') and against the stop (42); the distance (L) between the stop (42) and a forward end (23) of the finger (22, 22') when in the working position being adjustable to suit different lengths B of the packs (2 or 2'); and in order that the distance (L) can be adjusted,
a. the stop (42) is adjustable, viz. substantially horizontally adjustable, to suit different pack formats and in particular different pack lengths B, and/or
b. the length of the finger (22, 22') is adjustable, a forward end (23) of the finger (22') being adjustable to suit different formats and in particular different lengths of the packs (2 or 2') by longitudinal telescoping of the finger (22'), and/or
c. the length of the pad (25') is adjustable, a forward end of the pad (25') being adjustable to suit different pack formats.

2. Pack gripper according to Claim 1, **characterized in that** the adjustment of the distance between the forward end (23) of the finger (22, 22') and the stop (42) and/or the length of the pad (25') is power driven.

3. Pack gripper according to either of Claims 1 and 2, **characterized in that** the finger (22, 22') is arranged on an arm (12) which is articulated and by means of which the finger (22, 22') is movable between the said first and said second positions.

4. Pack gripper according to Claim 3, **characterized in that** the finger (22, 22') is movable by means of the arm (12) in such a way that in the first, or retracted, position, it is raised in scooplike fashion.

5. Pack gripper according to any one of Claims 1 to 4, **characterized in that** it comprises at least two gripper units (8) each with a finger (22, 22'), a pad (25, 25') and a stop (42).

6. Pack gripper according to Claim 5, **characterized in that** the at least two gripper units (8) are mounted displaceably on the support frame (6) so that the distance between these gripper units (8) is adjustable.

7. Pack gripper according to any one of Claims 1 to 6, **characterized in that** the stop (42) is formed by a stop element (30) that has a recess (39) within which the finger (22, 22') is at least partially arranged.

8. Pack gripper according to Claim 7, **characterized in that** the stop element (30) has two spaced-apart stop edges (31) between which the finger (22, 22') is situated in the working position.

9. Pack gripper according to Claim 7 or Claim 8, **characterized in that** the pad (25, 25') is also arranged within the said recess (39) of the stop element (30), above the finger (22, 22').

10. Method of palletizing packs (2, 2') of printed or unprinted products by means of a palletizing apparatus comprising at least one pack gripper (1, 1') which, for grasping and transporting at least one pack (2, 2') at a time, has a stop (42) against which the pack (2, 2') is rested, the pack (2, 2') rested against the stop (42) being grasped, and transported to a pallet (3) and placed thereon, by means of a finger (22, 22') and a pad (25, 25'), the finger (22, 22') being movable from a first position to a second position to grasp the at least one pack (2, 2') and when in that first position being located behind the stop (42) and when in the second position being located at least partially in front of the stop (42), so that a distance (L, L') between the stop (42) and a forward end (23) of the finger (22, 22') when in the working position is adjusted upon a change in pack length (B)
a. by adjusting, viz. substantially horizontally adjusting, the stop (42) to suit different pack formats and in particular different pack lengths B, and/or
b. by adjusting the length of the finger (22, 22'), a forward end (23) of the finger (22') being adjusted to suit different formats and in particular different lengths of the packs (2 or 2') by longitudinal telescoping of the finger (22'), and/or
c. by adjusting the length of the pad (25, 25'), a forward end of the pad (25') being adjustable to suit different pack formats.

11. Method according to Claim 10, **characterized in that** the adjustment of the distance (L, L') between the stop (42) and the forward end (23) of the finger (22, 22') is power driven.

12. Method according to Claim 10 or Claim 11, **characterized in that** the said distance (L, L') is adjusted by displacing a stop element (30) and/or a forward end of the finger (22, 22').

13. Method according to any one of Claims 10 to 12, **characterized in that** the said distance (L, L') is set so that the grasped pack (2, 2') has a predetermined overhang (46) in relation to the forward end of the finger (22, 22').

14. Method according to any one of Claims 10 to 13, **characterized in that** the finger (22, 22') is arranged on a movable arm (12), **in that** in a first step, the pack (2, 2') is laid against the said stop (42) by means of a feed apparatus, **in that** in a second method step, the finger (22, 22') reaches under the pack (2, 2'), and **in that** in a third step, the pack (2, 2') is clamped by the pad (25, 25').

15. Method according to any one of Claims 10 to 14, **characterized in that** the upper starting position of the pad (25, 25') is adjusted to suit the height of the next pack (2, 2') after a palletizing cycle is completed and before the next pack (2, 2') is grasped.

16. Method according to any one of Claims 10 to 15, **characterized in that** the finger (22, 22') is raised towards the rear in scooplike fashion when in the first position, and is orientated substantially horizontally when in the second position.

17. Method according to any one of Claims 10 to 16, **characterized in that** the pack (2, 2') is grasped between a single finger (22, 22') and a single pad (25, 25').

18. Method according to any one of Claims 10 to 17, **characterized in that** the adjusting motions of the stop (30) and/or fingers (22, 22') and/or pads (25, 25') are executed after the palletizing cycle is completed and before another pack (2, 2') is grasped.

## Revendications

1. Appareil de saisie de paquets, destiné à un dispositif de palettisation à l'aide duquel au moins un paquet respectif (2, 2'), constitué de produits imprimés ou non imprimés, peut être prélevé d'un dispositif d'amenée et déposé sur une palette (3), comprenant un bâti (6) et au moins un doigt (22, 22') monté sur ledit bâti et mobile entre des premier et second emplacements, sachant que ledit doigt (22, 22') se trouve, au premier emplacement, derrière une butée (42) et, au second emplacement, au moins par zones devant ladite butée (42) en occupant une position horizontale de travail dans laquelle le paquet (2, 2'), à présence minimale, peut être prélevé par ledit doigt (22, 22') ; et un bloc presseur (25, 25') permettant de coincer le paquet (2, respectivement 2') qui repose sur le doigt (22, 22') et est en applique contre la butée (42), la distance (L), comprise entre ladite butée (42) et une extrémité antérieure (23) dudit doigt (22, 22') occupant la position de travail, pouvant être modifiée en vue de l'adaptation à différentes longueurs B des paquets (2, respectivement 2'), sachant que, pour faire varier ladite distance (L),
a. la butée (42) est réglable, ladite butée (42) étant, pour l'essentiel, déplaçable horizontalement en vue de l'adaptation à différents formats de paquets et, en particulier, à différentes longueurs B desdits paquets, et/ou
b. la longueur du doigt (22, 22') est réglable, une extrémité antérieure (23) dudit doigt (22') étant déplaçable en vue de l'adaptation à différents formats et, en particulier, à différentes longueurs des paquets (2, respectivement 2'), du fait qu'un mouvement télescopique peut être imprimé audit doigt (22') suivant sa longueur, et/ou
c. la longueur du bloc presseur (25') est réglable, une extrémité antérieure dudit bloc presseur (25') pouvant être modifiée en vue de l'adaptation à différents formats de paquets.

2. Appareil de saisie de paquets, selon la revendication 1, **caractérisé par le fait que** la distance comprise entre la butée (42) et l'extrémité antérieure (23) du doigt (22, 22'), et/ou la longueur du bloc presseur (25'), peu(ven)t être réglé(e)s en mode motorisé.

3. Appareil de saisie de paquets, selon l'une des revendications 1 ou 2, **caractérisé par le fait que** le doigt (22, 22') est implanté sur un bras (12) de réalisation articulée, par lequel ledit doigt (22, 22') peut être mû entre les première et seconde positions précitées.

4. Appareil de saisie de paquets, selon la revendication 3, **caractérisé par le fait que** le doigt (22, 22') peut être mû avec le bras (12) afin d'être respectivement soulevé, à la manière d'une pelle, dans la première position ou dans une position rétractée.

5. Appareil de saisie de paquets, selon l'une des revendications 1 à 4, **caractérisé par le fait qu'**il comprend au moins deux unités de préhension (8) respectivement munies d'un doigt (22, 22'), d'un bloc presseur (25, 25') et d'une butée (42).

6. Appareil de saisie de paquets, selon la revendication 5, **caractérisé par le fait que** les deux unités de préhension (8), à présence minimale, sont montées à coulissement sur le bâti (6), afin d'autoriser une variation de la distance comprise entre ces unités de préhension (8).

7. Appareil de saisie de paquets, selon l'une des revendications 1 à 6, **caractérisé par le fait que** la butée (42) revêt la forme d'un élément d'arrêt (30) pourvu d'un évidement (39) dans lequel le doigt (22, 22') est logé, au moins par zones.

8. Appareil de saisie de paquets, selon la revendication 7, **caractérisé par le fait que** l'élément d'arrêt (30) comporte deux bords de butée (31) agencés à distance l'un de l'autre, entre lesquels le doigt (22, 22') est situé dans la position de travail.

9. Appareil de saisie de paquets, selon la revendication 7 ou 8, **caractérisé par le fait que** le bloc presseur (25, 25') est semblablement logé dans l'évidement précité (39) de l'élément d'arrêt (30), au-dessus du doigt (22, 22').

10. Procédé de palettisation de paquets (2, 2') constitués de produits imprimés ou non imprimés, à l'aide d'un dispositif de palettisation équipé d'au moins un appareil (1, 1') de saisie desdits paquets qui comporte, en vue de saisir et de transporter au moins un paquet respectif (2, 2'), une butée (42) contre laquelle ledit paquet (2, 2') est mis en applique, ledit paquet (2, 2'), appliqué contre ladite butée (42), étant saisi par un doigt (22, 22') et par un bloc presseur (25, 25'), puis transporté vers une palette (3) sur laquelle il est déposé, sachant que le doigt (22, 22') est mobile d'une première position à une seconde position, en vue de saisir le paquet (2, 2') à présence minimale, et que ledit doigt (22, 22') se trouve derrière la butée (42) dans cette première position et, au moins par zones, devant ladite butée (42) dans la seconde position, de sorte qu'une variation d'une longueur (B) des paquets se traduit par la variation d'une distance (L, L') comprise entre la butée (42) et une extrémité antérieure (23) du doigt (22, 22') occupant la position de travail, du fait que
a. la butée (42) est modifiée, ladite butée (42) étant, pour l'essentiel, déplacée horizontalement en vue de l'adaptation à différents formats de paquets et, en particulier, à différentes longueurs B desdits paquets, et/ou
b. la longueur du doigt (22, 22') est modifiée, une extrémité antérieure (23) dudit doigt (22') étant déplacée en vue de l'adaptation à différents formats et, en particulier, à différentes longueurs des paquets (2, respectivement 2'), ledit doigt (22') étant animé d'un mouvement télescopique suivant sa longueur, et/ou
c. la longueur du bloc presseur (25, 25') est modifiée, une extrémité antérieure dudit bloc presseur (25') pouvant être modifiée en vue de l'adaptation à différents formats de paquets.

11. Procédé selon la revendication 10, **caractérisé par le fait que** la distance (L, L'), comprise entre la butée (42) et l'extrémité antérieure (23) du doigt (22, 22'), est modifiée en mode motorisé.

12. Procédé selon la revendication 10 ou 11, **caractérisé par le fait que**, pour faire varier la distance (L, L') précitée, un élément d'arrêt (30) est animé de coulissements et/ou une extrémité antérieure du doigt (22, 22') est modifiée.

13. Procédé selon l'une des revendications 10 à 12, **caractérisé par le fait que** la distance (L, L') précitée est réglée de façon telle que le paquet saisi (2, 2') présente un débord prédéterminé (46) vis-à-vis de l'extrémité antérieure du doigt (22, 22').

14. Procédé selon l'une des revendications 10 à 13, **caractérisé par le fait que** le doigt (22, 22') est implanté sur un bras mobile (12) ; **par le fait que**, durant une première étape, le paquet (2, 2') est mis en applique contre la butée (42) précitée, au moyen d'un dispositif d'amenée ; **par le fait que**, lors d'une deuxième étape opératoire, ledit paquet (2, 2') est saisi par-dessous au moyen dudit doigt (22, 22') ; et **par le fait que**, pendant une troisième étape, ledit paquet (2, 2') est coincé par le bloc presseur (25, 25').

15. Procédé selon l'une des revendications 10 à 14, **caractérisé par le fait que** l'emplacement supérieur de départ du bloc presseur (25, 25') est adapté à la hauteur du paquet (2, 2') successif, respectivement après la palettisation ou avant la saisie d'un paquet (2, 2').

16. Procédé selon l'une des revendications 10 à 15, **caractérisé par le fait que** le doigt (22, 22') est soulevé à l'oblique vers l'arrière à la manière d'une pelle, dans la première position, et est orienté pour l'essentiel horizontalement dans la seconde position.

17. Procédé selon l'une des revendications 10 à 16, **caractérisé par le fait que** le paquet (2, 2') est saisi uniquement entre un doigt (22, 22') et un bloc presseur (25, 25').

18. Procédé selon l'une des revendications 10 à 17, **caractérisé par le fait que** les mouvements de réglage de la butée (42) et/ou des doigts (22, 22') et/ou des blocs presseurs (25, 25') s'opèrent, respectivement, après la palettisation ou avant la saisie d'un autre paquet (2, 2').
